# EUROPEAN PATENT APPLICATION

(11) **EP 1 930 354 A2**
(43) Date of publication of application: **11.06.2008**
(21) Application number: 08004201.3
(22) Date of filing: 01.09.2003
(51) Int. Cl.: C08G 18/10, C08G 18/66, G02B 1/04

(54) **Novel thermoplastic hydrogel polymer composition for use in producing contact lenses and methods of producing said compositions**

(30) Priority: 31.08.2002 GB 0220312
(62) Divisional of application: 03750888.4
(71) Applicant: OCUTEC LIMITED, Queenslie Glasgow City G33 4EL (GB)
(72) Inventor: The designation of the inventor has not yet been filed
(74) Representative: McNally, Roisin

(57) **Abstract**

The present invention relates generally to production of thermoplastic materials which swell in water to produce hydrogels. These materials will hereafter be referred to as "thermoplastic hydrogels". They are useful as contact lenses or for use in vision correction prosthetics or as cosmetic devices. In particular, the invention relates to thermoplastic hydrogels which show improved flow characteristics.

## Description

The present invention relates generally to production of thermoplastic materials which swell in water to produce hydrogels. These materials will hereafter be referred to as "thermoplastic hydrogels". They are useful as contact lenses or for use in vision correction prosthetics or as cosmetic devices. In particular, the invention relates to thermoplastic hydrogels which show improved flow characteristics.

It is already known in the art to make contact lenses using hydrogels. Generally these hydrogels do not utilise poly(ethylene glycols) but are made from the polymerisation of the single monomers HEMA, NVP or of other products of free radical polymerisation. However, these compositions generally are cross-linked and do not flow and can only be moulded by reaction injection moulding (RIM) or related "polymerisation in place" processes, which are slow and relatively expensive processes which are not particularly suited to contact lens manufacture.

Attempts have been reported (US Patent number 4,644,033) to incorporate the highly desirable properties of poly(ethylene oxide) molecular chains into crosslinked polyurethane materials for use, inter alia, in contact lenses. It was found that such preparation procedures in the absence of solvent produced only opaque products when swollen in water. Such opaque products cannot be used for the manufacture of contact lenses which demand clarity. It was found that clear urethane cross-linked polyethylene glycol products could be produced in the presence of dry organic solvent. This adds the necessity of solvent removal and raises questions of residual solvent toxicity to the cost of manufacture.

Also, existing reaction injection moulding techniques utilise free radical initiation or irradiation cure that produces radicals. These radicals initiate a peroxidation chain process, which leads ultimately to damage of PEO based polymers in storage for use which gives a short life to contact lenses produced from them. There are also problems with bio-compatibility of reaction injection moulded hydrogels which again is not ideal for the manufacture of contact lenses where bio-compatibility is importantant.

Additionally, the current cross linked polymer hydrogels often have a very poor resistance to crack initiation and crack propagation which again can be problematic when producing contact lenses.

It can therefore be seen that it would be beneficial to provide thermoplastic hydrogels which are capable of being generally moulded under pressure so that contact lenses can be easily and cheaply produced.

It is an aim of the present invention to provide a thermoplastic hydrogel composition which has the ability to flow under moderate shear at particular temperatures below the polymer decomposition temperature.

It is a further object of the present invention to provide a thermoplastic hydrogel composition which can be injection or compression moulded.

It is a further object of the present invention to provide a solvent soluble composition.

Another object of the present invention is to provide a thermoplastic hydrogel composition which is highly bio compatible.

A yet further object of the present invention is to provide thermoplastic hydrogels which have a high level of water swelling properties after moulding and swelling with water.

It is a further object of the present invention to provide thermoplastic hydrogels which can cover a range of degrees of water swelling.

It is a yet further object of the present invention to provide thermoplastic hydrogels that by design and choice are either clear or opaque to visible light.

According to a first aspect of the present invention, there is provided a method of producing thermoplastic hydrogels for use in producing contact lenses, comprising the steps of reacting one or more from the list;
polyethylene oxide,
polyol,
polyamine,
with a polyisocyanate and a polyfunctional amine or polyalcohol.

Preferably the polyol is polyethylene glycol.

Preferably, the method also comprises the step of end capping unreacted groups with a unit capable of producing hydrogen bonding, π bonding, ionic bonding, hydrophobic bonding and/or phase separation or forming a glassy or crystalline phase separated domain.

Alternatively, according to a second aspect of the present invention, the method also comprises the step of end capping unreacted groups with a unit from a list of:
Mono-functional amine
Mono-functional isocyanate
Mono-functional anhydride
Mono-functional acid
A cyclic diacid anhydride
Mono-functional alcohol

Preferably the reaction between one or more from the list
polyethylene oxide
polyol
polyamine
and a polyisocyanate is prepared using a range of NCO:OH or NCO:NH₂ ratios.

Optionally a biodegradable unit may be incorporated.

The biodegradable unit may be polycaprolactone, poly (lactic acid), poly(glycolic) acid or poly(hydroxybutyric)acid, amine or hydroxyl ended poly(amino) acids (protein or peptide analogues).

The ratios are preferably selected such that, at complete reaction, the product does not form a macrogel.

Preferably the first step reaction is prepared using a range of NCO:OH or NCO: NH₂ ratios from 2:1 to 1:2.

Optionally where both OH and NH₂ groups are used within the single reaction, a range of NCO:(OH+NH₂) ratios of 2:1 to 1:2.

Most preferably the first step reaction is prepared using NCO:OH or NCO:NH₂ ratios of 2.0:1 to 1:1.8 and 1.8:1 to 1:1.8.

Optionally the range of ratios used may be extended by the addition of monofunctional amines, alcohols or cyanates.

Alternatively, a macrogel is prevented from forming by stopping the reaction before completion.

Preferably, the reaction is stopped by the addition of a mohoamine, an amine terminated polymer, a mono-alcohol or an alcohol terminated polymer.

Optionally, the monoamine, mono-alcohol, amine terminated polymer or alcohol terminated polymer is added when the reaction is partially complete.

Alternatively, an amine or alcohol is admixed at the outset thus removing the possibility of gelation.

Preferably, the amine is added in the form of amine carbonate.

Typically, products with NCO end groups are subjected to a final curing by immersion in liquid water or steam after moulding.

Preferably, in the second stage the unreacted groups are capped with an amine.

Optionally, unreacted NCO groups are endcapped.

Another option is that unreacted OH groups are endcapped.

Preferably, terminal NCO groups are converted into a strongly hydrogen bonding urea group.

Preferably, the unreacted groups are capped with an aliphatic amine.

Optionally, the amine group is attached to a long linear or branched alkyl group or to an aryl- or aralkyl-amine.

Optionally, the amine group is attached to polymers or low molecular weight pre-polymers.

Alternatively, excess OH groups are capped with one or more molecules from the list of;
mono-isocyanate ended aromatic molecules,
mono-acid anhydride ended aromatic molecules,
mono-isocyanate ended aliphatic molecules,
mono-acid anhydride ended aliphatic molecules
reaction product of a monoamine with a di(or higher) isocyanate.

The groups used in the endcapping process allow the polymers to interact with physical or chemical cross-linking. The separate molecules or particles therefore bind to each other.

According to the third aspect of this invention there is provided a thermoplastic hydrogel for use in producing contact lenses, prosthetic lenses or cosmetic lenses produced by the methods of the first and second aspects.

Preferably, the hydrogel is completely polymerised under the specific conditions that are being used.

Preferably, after polymerisation the hydrogel is heated.

Alternatively, after polymerisation the hydrogel is immersed in water liquid or vapour.

Optionally, the end product may be pelletised, pressed, extruded or heat, pressure, injection or compression moulded.

Preferably, the end product incorporates an antioxidant containing two or more hydroxyl groups.

The antioxidant may be internal or external.

Preferably, the antioxidant is ascorbic acid.

Alternatively, the antioxidant is 2,6-ditertiarybutyl4-hyroxanisole.

Optionally the end product may develop opacity when swollen in water, thereby behaving as though it a contained a light scattering pigment with the appearance of the sclera.

Optionally, the end product can incorporate dye(s).

Optionally the end product can incorporate pigment

Optionally the end product may be blended with a water-soluble compatible solvent or plasticiser.

According to a fourth aspect of the present invention there is provided a contact lens, prosthetic lens or cosmetic lens produced from the hydrogel of the third aspect.

An example of the present invention will now be illustrated by way of example only and with reference to the following figure, in which:

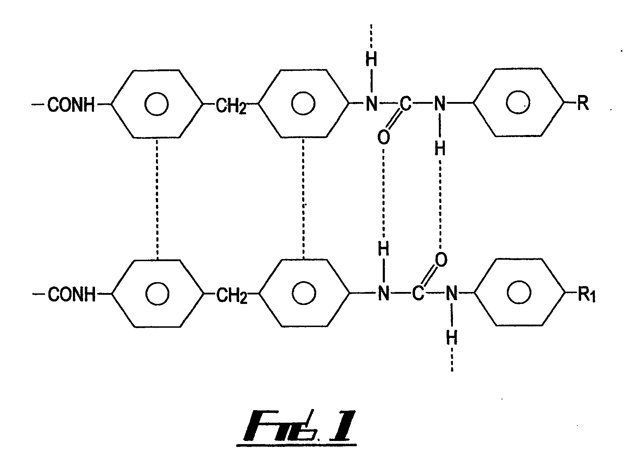

Figure 1 shows typical end groups that could be envisaged as being associated in stacks as shown.

In the preferred embodiment, the thermoplastic materials are prepared from mixtures of di (or higher) PEG polyol with a di (or higher) polyisocyanate and/or a di (or higher) polyamine.

First stage materials can also be made from many step-growth reactions amongst which the reaction of PEG polyols with polyacids with removal of reaction-produced water is an option. The production of first stage materials can also be guided by the art of making alkyd resins in the paint industry.

If the product from the first stage reaction is made from a mixture of PEG diol, 1, 2, 6-hexantriol and diphenylmethane-4,4-diisocyanate, it can be prepared using a range of NCO:OH ratios from, for example, 2:1 to 1:2. At the extremes of these ratios, the 2:1 will have all NCO unreacted groups and the 1:2 ratio will have all OH unreacted groups. These compositions are not able to macrogel and will contain only small proportions of modest molecular weight branched polymers. The product is a fluid and suitable for injection, extrusion or compression moulding at temperatures which are typically below 150°C, although temperatures of 200°C to 250°C can be utilised for short periods. It should be noted that the products with NCO end groups can only be moulded and subjected to final curing by immersion in liquid water or steam for a suitable period.

It is possible to use intermediate NCO:OH ratios, such as 2:1 to 1:1.8 and 1.8:1 to 1:1.8 (and these ranges can be further extended by the addition of mono-functional molecules). As these still provide at complete reaction, fluid systems, which when the end groups, are NCO can be injection moulded and post-cured by water or steam immersion. However, depending on the proportion of tri or higher functional materials, ratios such as 1.6:1 to 1:1.6 form macrogels at as complete a reaction as is possible with the NCO and OH groups present (and less extended ratios are possible if mono-functional amines, alcohols or cyanates are used in the first stage. The resulting products are not fuseable and are not solvent soluble). It is possible that the products may still be used for the second stage of the process, to give useful end capped products, if the reaction is stopped before it has proceeded as far as possible. This operation is less convenient and more difficult as the degree of completion of the reaction must be determined using, for example, infra-red analysis of the isocyanate absorption peak of the reaction mixture, or by the viscosity of the reaction. Therefore, it is much preferred to use the compositions which cannot macrogel, as they can be taken to completion of the first stage without fear of irreversibly solidifying the reactants.

A preferred embodiment is that the first stage product is a heavily branched polyurethane/PEG resin. In this embodiment, the second stage is intended to convert each of the terminal groups into a strongly hydrogen bonding urea group. An aliphatic amine could be used and the amine group could be attached to a short or long linear or branched (preferably linear) alkyl group, such as decyl or stearic or higher polyamines such as amine ended polyethylene, or to an aryl or aralkylamine, such as aniline, aminoanthracene or octylaniline. The combination of the urea group and the long aliphatic chain or aromatic ring will promote association and phase separation of these groups with development in the product material of toughness and strength by hydrogen bonding and hydrophobic bonding. This will be especially the case where an aromatic diisocyanate has been utilised in stage one.

Figure 1 shows a diagram of a typical end group which could be envisaged as associating in stacks, as shown. The association of many such end groups should provide increased cohesion and strength to the product.

Once the initial homogeneous mixing has been completed, then the still fluid mix may be poured into suitable containers, such as polypropylene moulds. The polymerisation (curing) of the finished product can then be completed. In order to provide an oxidation resistant product, it is particularly useful to incorporate a reactive antioxidant containing two or more hydroxyl groups, for example, ascorbic acid (alternatively an external anti-oxidants may be used). Alternatively the antioxidant may be added in earlier during the first stage.

The final product can be extruded or spun into film or fibre or coated onto staple or continuous preformed fibres to provide a form of product which can be knitted, braided woven or otherwise fabricated by techniques well know to those skilled in the art. The product has a number of benefits, in particular as there will be no unreacted extractable groups left in the completed product, it is particularly useful for contact lenses as it is bio-compatible. There is also the benefit that materials made from the final hydrogel product which are soft and strong would be comfortable and re-useable again something which can be particularly useful in contact lens manufacture. The final product would also have the benefit of being intrinsically rubbery in their dry state, and therefore contact lenses would not set rigid when dried out. Also, coloured dyes and pigments can be put into the final product easily, which cannot be done readily with similar cross-linked hydrogels and this could be useful when making "fashion" contact lenses, or sun protective or prosthetic contact lenses which have colours, designs or dyes with particular characteristics incorporated into them.

The product of this invention can be designed to either be clear for vision correction contact lenses or opaque for cosmetic lenses or prosthetic lenses. The general empirical rule for clear lenses is that the components should be compatible in both the reaction mixture and in the product. The well known solubility parameters available may be used as a guide to materials that will be compatible and produce clear lenses. Reaction materials having large solubility parameter differences but which provide a homogenous reaction mixture will be likely to produce opaque white material on polymerisation. Such materials are desirable for the simulation of bright white sclera for cosmetic or prosthetic lenses. When reaction mixtures are changed systematically within a series of identical reagents in varying ratios, often both clear and opaque formulations are formed from particular ranges of compositions made from the same stock of starting materials.

It is worth noting that in many cases clear lenses occur mainly when using aromatic amines and opaque when using aliphatic amines, although this is not necessarily always the case.

### Examples

### 1. POLYMERS PREPARED BY USING THE ALIPHATIC AMINE ETHYLENEDIAMINE (EDA) AND ALIPHATIC ISOCYANATE DICYCLOHEXXLMETHANE-4,4' -DIISOCYANATE (DesmodurW) . 1,2,6-HEXANE TRIOL (HT) WAS ALSO USED. THE POLY(ETHYLENE GLYCOL) (PEG) HAD A MEASUED NUMBER AVERAGE MOLECULAR WEIGHT OF 3130 AND THE POLY (PROPYLENE GLYCOL) PPG A VALUE OF 425.

The following compositions were prepared where the symbols carry the usual names.

### (a) PUU3130CX (0.5HT) (O.5EDA)

| | **mol** | **intended wt used (g)** | **actual wt used (g)** |
|---|---|---|---|
| PEG 3130 | (1) | 5.00 | 5.00 |
| PPG 425 | (15) | 10.1837 | 10.188 |
| HT | (0.5) | 0.1071 | 0.1071 |
| EDA | (0.5) | 0.048g | 0.050 |
| DesmodurW | (18.11) | 7.5950g | 7.595 |
| FeCl₃ | 0.02 wt% | 4.58mg | 4mg |

### Procedure

The following method of preparation was used for all of the examples that follow. All of the reaction components were either dry as used or else they were dried (i.e. the PEO AND PPG) using a "Rotavap" rotating heated vacuum drier. The dry PEG , PPG and HT were placed in a beaker and heated to 95C and mixed thoroughly with the aid of a glass rod. The anydrous ferric chloride catalyst was then blended in small increments at a time with stirring ensuring that each small addition was dissolved before the next was added. When an amine was used it was added and blended in a similar fashion. Finally the DesmodurW diisocyanate was added as rapidly as possible with stirring and the reaction allowed to proceed at 95C.

Cured for 20 hours at 95°C. The product was solid at room temperature and thermoplastic at elevated temperatures. It formed contact lenses, by the usual method of pressing between polypropylene moulds, which were readily demoulded when cold.

The lens was initially clear but became slightly hazy in water.

The polymer swelled to high degree in tetrahydrofuran but would not dissolve.

### (b) PUU3130DX (0.5HT (0.5EDA)

| | **mol** | **intended wt. used (g)** | **actual wt used (g)** |
|---|---|---|---|
| PEG 3130 | (1) | 5.00 | 5.124 |
| PPG 425 | (20) | 13.5782 | 13.580 |
| HT | (0.5) | 0.10717 | 0.1071 |
| EDA | (0.5) | 0.0480 | 0.059 |
| DesmodurW | (23.3625) | 9.7965 | 9.796 |
| FeCl₃ | 0.02 wt% | 5.7mg | 6mg |

### Procedure

Synthesised in the manner presented above. The product was a soft solid which was thermoplastic. It was a suitable material for further modification by reaction with amine or hydroxyl-containing modifiers as is illustrated for a related composition in the following example in which the proportion of isocyanate-containing component DesmodurW is increased.

The compression method afforded lenses very easily from this product without further reaction but the product was very sticky and did not demould in dry state. The lens with mould was immersed in water over weekend after which time the lens had swollen off it's support. It was soluble in THF.

### 2. A STAGE1 POLYMER WITH EXCESS OF ALIPHATIC ISOCYANATE AND A LINEAR ALIPHATIC AMINE (0.75 EDA)

### PUU3130CX(0.5HT) (0.75 EDA) with excess of DesmodurW

| | **mol** | **intended wt. Used (g)** | **actual wt. used (g)** |
|---|---|---|---|
| PEG 3130 | (1) | 5.00 | 5.00 |
| PPG 425 | (15) | 10.1837 | 10.188 |
| HT | (0.5) | 0.1071 | 0.1071 |
| EDA | (0.75) | 0.071 | 0.072 |
| DesmodurW | (44.0) | 18.450 | 18.375 |
| FeCl₃ | 0.02 wt% | 4.58mg | 5mg |

### Procedure

The usual method. The product solidified on cooling but melts when hot.

This product produced lens-shape by the usual method. The product was immersed in water when it fragmented. White sections of polymer were obtained in the lens mould.
This material was soluble in methanol and precipitated when a little water were added. The product was also soluble in tetrahydrofuran. It is not suitable for moulding into lenses but is used here to exemplify the ready formation of end-capped modified thermoplastic polymers using the following end group modifiers by:
2.a Reaction with benzylamine in the absence of solvent.
2.b Reaction with butylamine in the absence of solvent
2.c Reaction with dibutylamine in the absence of solvent

Those expert in the synthesis of polymers would readily see how to extend this procedure to many other simple amine or hydroxyl-containing molecules and to end-capping with many amine and hydroxyl ended low-molecular weight polymers.

### 2.a Reaction with Benzylamine

| | | |
|---|---|---|
| Wt of the prepolymer with excess isocyanate | = | 4.275g |
| Wt of the benzylamine | = | 1.00g |

### Procedure

Both materials were mixed and allowed to react at 95°C for half an hour. The materials were in a round bottom flask that was rotated using a rotary evaporator while immersed in an oil bath at 95°C.

The product was thermoplastic and fluid and could be readily moulded into a lens that appeared optically transparent though it was fragile and broke when attempts were made to detach it from the mould.

### 2.b Reaction with Butylamine

| | | |
|---|---|---|
| Weight of the prepolymer | = | 4.278g |
| Weight of the butylamine | = | 1.380g |

### Procedure

The reaction was carried out in a beaker placed in an oven at 95°C with stirring manually, using a glass rod. The polymerising mixture was cured for 2 hours at 95°C. The product was a brittle, hard, thermoplastic which forms a clear lens.

### 2.c Reaction with Dibutylamine

| | | |
|---|---|---|
| Weight of the stage1 polymer | = | 4.275g |
| Weight of the benzylamine | = | 1.380g |

The procedure used was the same as described in (2.b).

The product was a sticky, thermoplastic which can be moulded into a lens easily but is physically rather weak after immersion in water.

### 3. PREPOLYMER WITH EXCESS OF OH GROUPS CONTAINING EXCESS HYDROXYL AND UREA UNITS FORMED USING AN AROMATIC AMINE DIPHENTnLMETHANE-4,4' -DIISOCYANATE (DPDA)

### PUU3130CX(0.5HT) with excess of alcohol groups

| | **mol** | **intended wt used (g)** | **actual wt used (g)** |
|---|---|---|---|
| PEG 3130 | (1) | 10.00 g | 10.01 |
| PPG 425 | (15) | 20.3674 | 20.376 |
| HT | (0.5) | 0.2143 | 0.214 |
| EDA | (0.5) | 0.3167 | 0.317 |
| DPDA | (10.25) | 8.5962 | 8.63 g |
| FeCl₃ | 0.02 wt% | 7.96 mg | 8.0 mg |

The prepolymer was prepared as above and remained liquid after 5 hours of reaction at 95°C. The mixture could not be gelled and demonstrates the ability of compositions having a suitable excess of one of the reacting groups to provide a stage1 polymer without the possibility of gelling in the reaction vessel. On cooling the material solidifies but melts again when heated. It forms a useful basis for either end-capping with desired
materials or for preparing reactive mixtures which can be formed into lens shapes and subsequently crosslinked by heating. Because of its fast rate of reaction the aliphatic diisocyanate DPDA is a very suitable crosslinking agent.

This prepolymer was used for the following curing reaction:

### The Prepolymer and Desmodur W

Weight of the stage 1 polymer with excess of alcoholic groups =10.0 g
DesmodurW added to the same beaker =1.467 g

Mixed well. The resulting very fluid material was.poured into a polypropylene tube and cured for 4 hours at 95°C. The polymer gelled sometime within 2 hours and on cooling provided a strong crosslinked product. This would clearly have been able to be moulded and formed into crosslinked lenses before the second stage curing.

### Incorporation of antioxidant butylated hydroxyl anisole (BHA) and using diphenylmethaae-4,4'-dismine(DPDA) PUU5950 BX (0.75 HT)

| | **mol** | **intended wt. used (g)** | **Actual wt used (g)** |
|---|---|---|---|
| PEG 5950 | (1) | 10 | 10.00 |
| HT | (0.75) | 0.1691 | 0.169 |
| PPG 425 | (10) | 7.1428 | 7.147 |
| DesmodurW | (13.2562) | 5.8483 | 8.63 g |
| BHA | (0.03% by wt of PEG) | 3 mg | 3 mg |
| DPDA | (0.5) | 0.1666 | 0.166 |
| FeCl₃ | 0.02 wt% | 4.66 mg | 4.0 mg |

When BHA added to the reaction there was a very slight darkening in the colour. change in colour. The reaction product was fluid and could be moulded into clear contact lenses.

### Procedure

HT and PPG, FeCl₃ and DPDA, BHA and D were mixed in this order and allowed to cure in polypropylene test-tube.

| | **mol** | **intended wt used (g)** | **actual wt used (g)** |
|---|---|---|---|
| PEG 5950 | (1) | 10 | 10.02 |
| HT | (0.75) | 0.1691 | 0.171 |
| PPG 425 | (10) | 7.1428 | 7.147 |
| DesmodurW | (13.2562) | 5.8483 | 8.63 g |
| BHA | .3% by wt. of PEG) | 0.3000 mg | 0.305 mg |
| DPDA | (0.5) | 0.1666 | 0.166 |
| FeCl₃ | 0.02 wt% | 4.66 mg | 6.0 mg |

In the case of the very high 3% level of BHA the reaction became immediately very dark but returned to slightly darker yellow than expected without BHA when PEG was added and mixed. No other visual effect was observed and the product set solid when cold and became fluid and mouldable when hot when it could be moulded readily .into transparent lenses

These results show that the antioxidant BHA can be incorporated into the stage1 reaction.

### 4. THERMOPLASTIC HYDROGELS SUITABLE FOR USE IN CLEAR VISION CORRECTION CONTACT LENSES.

Thermo plastic hydrogelcompositions were made from poly(ethylene glycol), poly(propylene glycol), 1,2,6-hexane triol, dicyclohexylmethane-4,4'-diisocyanate and diphenylmethane-4,4'-diamine(DPDA). The overall composition has a functionality of >2.

Three batches of poly(urethane urea) denoted PUU polymers coded PUU 5950 BX (0.5 HT), PUU 5950 BX (0.6 HT), and PUU 5950 BX (0.75 HT) were prepared by a single step bulk polymerisation method described below. The molar compositions and the weight compositions are given in the next two tables below.

### Chemical compositions PUU polymers

| **Polymer unit denoted SOFT as** | **BLOCKS HARD** | | **BLOCKS** | | **TRIOL** |
|---|---|---|---|---|---|
| | **PEG** | **PPG 425** | **DPDA** | **Desmodur W** | **HT** |
| | moles | (moles) | (moles) | (moles) | (moles) |
| PUU5950 BX (0.5HT) Batch 1,2,3 | 1 | 10 | 0.5 | 12.8625 | 0.5 |
| PUU5950 BX (0.6HT) Batch 1,2,3 | 1 | 10 | 0.5 | 13.02 | 0.6 |
| PUU5950 BX (0.75HT) 1 Batch 1,2,3 | | 10 | 0.5 | 13.2562 | 0.75 |

Ferric chloride catalyst was used as 0.02 wt% of the reactants
DesmodurW was used as 5 mol% in excess of stoichiometric quantity

The appropriate quantities of hexane triol (HT) and dehydrated PPG 425 weighed into a beaker to which the calculated quantity of ferric chloride catalyst was added. The beaker was then placed in the oven at 95 C. Within -15 minutes the catalyst dissolved assisted by occasional stirring. The DPDA was then added, mixed and left in the oven. Once the DPDA had dissolved the dehydrated molten PEG was added, mixed thoroughly and left in the oven for few minutes. Finally, the required amount of Desmodur W (dicyclohexylmethane-4,4'-diisocyanate) was directly weighed into the beaker containing the other reactants, mixed and left in the oven with occasional stirring for 15 minutes. This was then poured into preheated polypropylene moulds and placed in the oven at 95 deg C to cure over 22 hours. After this period the oven was switched off, the product was allowed to cool and readily demoulded after quenching in liquid nitrogen.

### Weights of reactants used

| **Polymer denoted as** | **SOFT BLOCK** | | **HARD BLOCK** | | **Triol** |
|---|---|---|---|---|---|
| | **PEG (g)** | **PPG 425 DPDA (g)** | **(g)** | **Desmodur W(g)** | **HT (g)** |
| PUU5950BX (0.5HT) 10 | | 7.1428 | 0.166 | 5.6746 | 0.1127 |
| PUU5950BX (0.6HT) Batch1,2,3 | 10 | 7.1428 | 0.166 | 5.7441 | 0.1353 |
| PUU5950 BX (0.75HT) Batch1,2,3 | 10 | 7.1428 | 0.166 | 5.8483 | 0.1691 |

Ferric chloride was used as 0.02 wt% of the reactants DesmodurW was sued as 5 mol% in excess of stoichiometric quantity
Actual amounts of the materials used were kept close to the calculated values

### Swelling test.

Slices from polymer billets were cut and three slices of essentially identical thickness were allowed,to swell to equilibrium in water at ambient temperature. The swelling (%) calculated by the equation: % swelling = Weight of the swollen slice - weight of the dry slice/weight of the swollen slice. The three test results were averaged.

### Test of thermoplasticity.

A small disk of the thermoplastic hydrogel was placed between two polypropylene moulds which when compressed formed a prescription contact lens shape between their faces. The disk was placed into the female section and the male half of the mould was placed on top. After 10 minutes heating at 95C the ability of the test thermoplastic hydrogel composition to flow and form a contact lens when cooled to room temperature was evaluated under the pressure between the thumb and forefinger. The mould was cooled and the solid moulded contact lens removed using forceps and then made available for testing.

Average swelling of PUU polymers in water at ambient temperature.

| **Polymer composition** | **Swelling data (pph)** | **Swelling data (%)** | **Average Swelling (%)** |
|---|---|---|---|
| PUU5950BX (0.5HT) Batch 1 | 253.6 | 72 | |
| PUU5950BX (0.5HT) Batch 2 | 253.7 | 72 | |
| PUU5950BX (0.5HT) Batch 3 | 244.8 | 71 | 72 |
| | | | |
| PUU5950BX (0.6HT) Batch 1 | 246.6 | 71 | |
| PUU5950BX (0.6HT) Batch 2 | 229.9 | 70 | |
| PUU5950BX (0.6HT) Batch 3 | 279.7 | 74 | 71 |
| | | | |
| PUU5950BX (0.75HT) Batch 1 | 224.5 | 69 | |
| PUU5950BX (0.75HT) Batch 2 | 239.3 | 70 | |
| PUU5950BX (0.75HT) Batch 3 | 222.7 | 69 | 69 |

### Swelling test results

The results from the swelling tests in water at ambient temperature are summarised in Table 3. Only a small variation in the swelling values was seen in the polymers that contained HT (see Table 3) in spite of the significant change in the amount of the triol used. The visual appearance of the swollen polymers also varied. It was observed that the PUU 5950 BX (0.5 HT) polymer occasionally afforded "frostiness" possibly due to micro stress cracking in the water- swollen state. Polymer PUU 5950 BX (0.6 HT) with slightly increased HT from 0.5 molar to 0.6 molar showed the effect in an occasional batch. However such "frostiness" in PUU 5950 BX(0.75HT) was not observed at all. The lenses produced were transparent and the obtained degree of swelling of 69% is a very useful figure for contact lenses.

Some selected results from GPC analysis of PUU polymers

| **Polymer** | **Mₙ** | **M_{w}** | **M_{w}/Mₙ** |
|---|---|---|---|
| PUU5950BX (0.5HT) Batch 1 | 6.603 x 10³ | 1.674 x 10⁴ | 2.535±0.044 |
| PUU5950BX (0.5HT) Batch 2 | 6.399 x 10³ | 1.456 x 10⁴ | 2.275±0.038 |
| PUU5950BX (0.5HT) Batch 3 | 6.049 x 10³ | 1.349 x 10⁴ | 2.231±0.059 |

The following conclusions can be drawn from the above
■ All polymer compositions investigated were thermoplastic and afforded contact lenses when subjected to the compression technique.
■ The chemical structure of all the polymer compositions were shown to be similar by the FTIR analysis and reproducible within three batches of a given polymer composition.
■ GPC analysis Table 4 confirmed good reproducibility among three batches of a given polymer composition. The polydispersity values of all the polymers were from 2.2-2.6 . These values are quite broad but consistent with that to be expected from a step-growth polymerisation. The M_{w} and Mₙ values within three batches of a given polymer composition were quite similar - a desired result and indicates a good reproducibility.
■ FTIR analysis clearly indicated that free primary amine of DPDA after polymerisation has disappeared and been converted to secondary amine to form a urethane/urea group of the polymer structure.

### 5. PREPARATION OF THERMOPLASTIC HYDROGELS FROM A POLYURETHANE WITHOUT THE USE OF A DIAMINE AS A COMPONENT OF THE STAGE 1 COPOLYMER

The polymers were made according to a closely similar to the procedure described previously.above. The reactants were poly(ethylene glycol) described by the supplier as PEG6000 and meaning a PEG having a number average molecular weight close to 6000. 1,2,6-hexanetriol, and dicyclohexylmethane-4,4'-diisocyanate (DesmodurW) and using anhydrous ferric chloride (0.2mg per g. of reactants) as the catalyst. The molar proportions used are given in Table 4 below. Other compositions made nearer to stoichiometry of the hydroxyl and isocyanate groups crosslinked during the curing reaction so at complete reaction could not provide thermoplastic hydrogels. They would have done so if the reactions had been terminated prior to complete reaction.

| **Preparation number** | **PEG6000** | **1,2,6-HEXANETRIOL** | **Desmodur W** |
|---|---|---|---|
| 1 | 1 MOLE | 1 MOLE | 3.75 |
| 2 | 1 MOLE | 1 MOLE | 5.0 |

After fours hours cure at 90C the products were cooled demoulded and stored in sealed bags away from air and light. A few of the samples were converted into thin slices and sample slices were evaluated for their ability to thermoform in a "Rosslyn" heat press. At 115C the slices became very fluid and could be pressed into thin films. These became solid at 110C and formed solid pliable hydrogel films.

Cut film samples were allowed to swell in water to equilibrium when they became.clear transparent gels. They were insoluble in water but swelled to a high degree as given in the table below.

| **Sample** | **Dry weight of slice in g.** | **swollen weight of slice** | **% equivalent of isocyanate in the preparation** |
|---|---|---|---|
| 1 | .730 | 3.845 | 1.5 |
| 2 | .223 | 2.282 | 2.0 |

Sample 1 was completely soluble in methanol demonstrating that it was not a crosslinked gel before contact with water when the residual isocyanate groups would have been converted to urea crosslinks.

It can be seen that the embodiments disclosed are both or merely exemplary of the present invention, which may be embodied in many different forms. Therefore, details disclosed herein are not to be interpreted as limiting, but merely as a basis for the claims and for teaching one skilled in art as to the various uses of the present invention in any appropriate matter. In particular, it should be noted that a wide variety of changes can be made in this process.

For example, pre-polymers with excess OH can be capped with a mono-isocyanate ended aromatic or aliphatic molecule or with a reaction product of a mono-amine with di or higher isocyanate. The low molecular weight amine could be replaced with a low molecular weight polymeric amine, such as low Mₙ primary and secondary amine ended nylon polyamide) or polypropylene oxide, poly(butanediol) or low molecular weight polymers producing glassy domains such as end-capped polystyrenes or amine end-capped hydrophobic and crystalline domain forms such as poly(ethylene) units. The reaction can be between such amine ended PEGs (poly(ethylene glycols)) and PPGs (poly(propylene glycols)) and di or higher amines and di or higher isocyanates, but done in solvents to allow suitable reduced viscosity to be obtained. Also, to slow down the amine reaction, the amine can be added at the outset as the carbonate version of amine carbonate, resulting from the reaction of amine and carbon dioxide.

Also, stage one hydroxlic excess polymers could be reacted with a phase separating polymer end capped with an anhydride group.

Finally, it should be noted that this end capping process could be applied to a wide variety of polymers, such as polyesters, nylons, polyurethanes, polyureas, polyethers, polyolefins, polyvinyls and poly(meth)acrylates.

## Claims

1. A method of producing thermoplastic hydrogels for use in producing contact lenses, comprising the step of reacting one or more from the list;
polyethylene oxide,
polyol,
polyamine,
with a polyisocyanate and a polyfunctional amine or polyalcohol.

2. A method of producing thermoplastic hydrogels for use in producing contact lenses, comprising the step of reacting one or more from the list
polyethylene oxide
polyol
polyamine
and a polyisocyanate that is prepared using a range of NCO:OH or NCO:NH₂ ratios.

3. A method of producing thermoplastic hydrogels as in Claims 1 or 2 wherein the polyol is polyethylene glycol.

4. A method of producing thermoplastic hydrogels as in any of the previous Claims wherein the method also comprises the step of end capping unreacted groups with a unit capable of producing hydrogen bonding, π bonding, ionic bonding, hydrophobic bonding and/or phase separation or forming a glassy or crystalline phase separated domain.

5. A method of producing thermoplastic hydrogels as in Claims 1 - 3 wherein the method also comprises the step of end capping unreacted groups with a unit from a list of:
Mono-functional amine
Mono-functional isocyanate
Mono-functional anhydride
Mono-functional acid
A cyclic diacid anhydride
Mono-functional alcohol

6. A method of producing thermoplastic hydrogels as in any of the previous Claims wherein a biodegradable unit may be incorporated.

7. A method of producing thermoplastic hydrogels as in Claim 6 wherein biodegradable unit may be polycaprolactone, poly (lactic acid), poly(glycolic) acid or poly(hydroxybutyric)acid, amine or hydroxyl ended poly(amino) acids (protein or peptide analogues).

8. A method of producing thermoplastic hydrogels as in any of the previous Claims wherein the ratios of the components are selected such that, at complete reaction, the product does not form a macrogel.

9. A method of producing thermoplastic hydrogels as in any of the previous Claims wherein the reaction is prepared using a range of NCO:OH or NCO:NH₂ ratios from 2:1 to 1:2.

10. A method of producing thermoplastic hydrogels as in any of the previous Claims wherein where both OH and NH₂ groups are used within the single reaction, a range of NCO:(OH+NH₂) ratios of 2:1 to 1:2.

11. A method of producing thermoplastic hydrogels as in any of the previous Claims wherein the first step reaction is prepared using NCO:OH or NCO:NH₂ ratios of 2.0:1 to 1:1.8 and 1.8:1 to 1:1.8..

12. A method of producing thermoplastic hydrogels as in any of the previous Claims wherein the range of ratios used may be extended by the addition of monofunctional amines, alcohols or cyanates.

13. A method of producing thermoplastic hydrogels as in any of the previous Claims wherein a macrogel is prevented from forming by stopping the reaction before completion.

14. A method of producing thermoplastic hydrogels as in Claim 13 wherein the reaction is stopped by the addition of a monoamine, an amine terminated polymer, a mono-alcohol or an alcohol terminated polymer.

15. A method of producing thermoplastic hydrogels as in Claim 14 wherein the monoamine, mono-alcohol, amine terminated polymer or alcohol terminated polymer is added when the reaction is partially complete.

16. A method of producing thermoplastic hydrogels as in Claims 1-12 wherein an amine or alcohol is admixed at the outset thus removing the possibility of gelation.

17. A method of producing thermoplastic hydrogels as in Claim 16 wherein the amine is added in the form of amine carbonate.

18. A method of producing thermoplastic hydrogels as any of the previous Claims wherein products with NCO end groups are subjected to a final curing by immersion in liquid water or steam after moulding.

19. A method of producing thermoplastic hydrogels as in any of the previous Claims wherein, after the initial reaction, a second stage occurs, and in the second stage the unreacted groups are capped with an amine.

20. A method of producing thermoplastic hydrogels as in Claim 19 wherein unreacted NCO groups are endcapped.

21. A method of producing thermoplastic hydrogels as in Claim 19 wherein unreacted OH groups are endcapped.

22. A method of producing thermoplastic hydrogels as in Claims 19 and 20 wherein terminal NCO groups are converted into a strongly hydrogen bonding urea group.

23. A method of producing thermoplastic hydrogels as in Claims 19-22 wherein the unreacted groups are capped with an aliphatic amine.

24. A method of producing thermoplastic hydrogels as in Claim 23 wherein the amine group is attached to a long linear or branched alkyl group or to an aryl- or aralkyl-amine.

25. A method of producing thermoplastic hydrogels as in Claim 23 wherein the amine group is attached to polymers or low molecular weight pre-polymers.

26. A method of producing thermoplastic hydrogels as in Claims 19 and 21 wherein, excess OH groups are capped with one or more molecules from the list of;
mono-isocyanate ended aromatic molecules,
mono-acid anhydride ended aromatic molecules,
mono-isocyanate ended aliphatic molecules,
mono-acid anhydride ended aliphatic molecules
reaction product of a monoamine with a di(or higher) isocyanate.

27. A method of producing thermoplastic hydrogels as in Claims 19-26 wherein the groups used in the endcapping process allow the polymers to interact with physical or chemical cross-linking.

28. A thermoplastic hydrogel for use in producing contact lenses, prosthetic lenses or cosmetic lenses produced by the methods described in Claims 1-27.

29. A thermoplastic hydrogel as in Claim 28 wherein the hydrogel is completely polymerised under the specific conditions that are being used.

30. A thermoplastic hydrogel as in Claims 28 and 29 wherein after polymerisation the hydrogel is heated.

31. A thermoplastic hydrogel as in Claims 28 and 29 wherein after polymerisation the hydrogel is immersed in water liquid or vapour.

32. A thermoplastic hydrogel as in Claims 28 - 31 wherein the hydrogel may be pelletised, pressed, extruded or heat, pressure, injection or compression moulded.

33. A thermoplastic hydrogel as in Claims 28 - 32 wherein the end product incorporates an antioxidant containing two or more hydroxyl groups.

34. A thermoplastic hydrogel as in Claim 33 wherein he antioxidant may be internal or external.

35. A thermoplastic hydrogel as in Claims 33 and 34 wherein the antioxidant is ascorbic acid.

36. A thermoplastic hydrogel as in Claims 33 and 34 wherein the antioxidant is 2,6-ditertiarybutyl4-hyroxanisole.

37. A thermoplastic hydrogel as in Claims 28 - 36 wherein the hydrogel develops opacity when swollen in water.

38. A thermoplastic hydrogel as in Claims 28 - 37 wherein the hydrogel incorporates dye(s).

39. A thermoplastic hydrogel as in Claims 28 - 38 wherein the hydrogel incorporates pigment.

40. A contact lens, prosthetic lens or cosmetic lens produced from the hydrogel of Claims 28-39.
